# FASCICULE DE BREVET EUROPEEN

(11) **EP 0 758 579 B1**
(45) Date de publication et mention de la délivrance du brevet: **27.11.2002**
(21) Numéro de dépôt: 96202201.8
(22) Date de dépôt: 06.08.1996
(51) Int. Cl.: B29C 49/20, B60K 15/077

(54) **Procédé pour la fixation d'un élément à l'intérieur d'un corps creux en matière thermoplastique**
Verfahren zum Befestigen eines Elements im Inneren eines Kunststoffhohlkörpers
Method for fixing an element to the inner part of a hollow thermoplastic body

(30) Priorité: 11.08.1995 BE 9500691
(43) Date de publication de la demande: 19.02.1997
(73) Titulaire: Inergy Automotive Systems Research (SA), 1120 Bruxelles (BE)
(72) Inventeur: Cerbelle, Lionel, 53000 Laval (FR); Percebois, Serge, 53230 Courbeveille (FR); Cuvelliez, Charles, 1640 Rhode-Saint-Genese (BE); Jacquet, Xavier, B-1853 Strombeek (BE)
(74) Mandataire: Decamps, Alain René François

(56) Documents cités:
- EP-A- 0 514 555
- EP-A- 0 571 876
- GB-A- 2 201 628
- GB-A- 2 236 288
- US-A- 4 703 771
- US-A- 4 719 072
- US-A- 4 951 699
- US-A- 4 952 347
- US-A- 5 197 443
- PATENT ABSTRACTS OF JAPAN vol. 004, no. 123 (M-029), 30 Août 1980 & JP-A-55 079121 (NISSAN MOTOR CO LTD), 14 Juin 1980,
- PATENT ABSTRACTS OF JAPAN vol. 005, no. 080 (M-070), 26 Mai 1981 & JP-A-56 028831 (SHOWA DENKO KK), 23 Mars 1981,
- PATENT ABSTRACTS OF JAPAN vol. 004, no. 041 (M-005), 29 Mars 1980 & JP-A-55 011846 (SHOWA YUKA KK), 28 Janvier 1980,
- PATENT ABSTRACTS OF JAPAN vol. 004, no. 057 (M-009), 26 Avril 1980 & JP-A-55 025380 (KODAMA KAGAKU KOGYO KK), 23 Février 1980,

## Description

La présente invention concerne un procédé pour la fixation d'un siphon à l'intérieur d'un corps creux en matière thermoplastique. Elle concerne également un tel corps creux à l'intérieur duquel a été fixé un siphon.

Les corps creux, par exemple des flacons ou des réservoirs, sont le plus souvent utilisés pour contenir un fluide auquel ils sont substantiellement imperméables. Aujourd'hui, les matières thermoplastiques sont largement utilisées pour la fabrication de tels corps creux, vu notamment leur facilité de mise en oeuvre en des formes complexes, leur légèreté, leur résistance en particulier à la corrosion. Les corps creux en matière thermoplastique peuvent être fabriqués en particulier par extrusion-soufflage.

Il est parfois nécessaire de placer à l'intérieur des corps creux certains éléments qui doivent y être positionnés de manière précise et fixés de manière fiable et durable. Un tel placement est parfois difficile, voire impossible, après réalisation du corps creux, vu notamment la position à atteindre et les dimensions respectives des orifices du corps creux et de l'élément à insérer. Il est alors connu notamment de positionner l'élément à fixer avant la réalisation du corps creux, en particulier avant la fermeture du moule de soufflage. On peut ainsi introduire l'élément à l'intérieur de la paraison extrudée dans le moule et l'y maintenir au moyen d'une tige avant la fermeture du moule et le soufflage du corps creux. Néanmoins, un tel positionnement au moyen d'une tige ne permet pas d'assurer un effort suffisant lors de la fermeture du moule pour obtenir la fixation fiable et durable de l'élément dans le corps creux.

Il a également été proposé (GB 2279606), outre le maintien de l'élément dans la paraison au moyen d'une tige, de former préalablement dans l'élément des encastrements destinés à coopérer avec la surface intérieure du corps creux. Outre la complexité supplémentaire qu'il induit, ce procédé n'empêche pas que la qualité de la fixation de l'élément dans le corps creux reste très largement dépendante de la tige de positionnement.

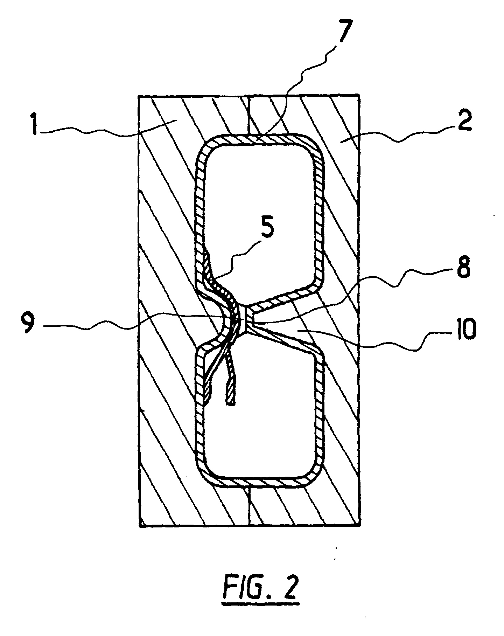

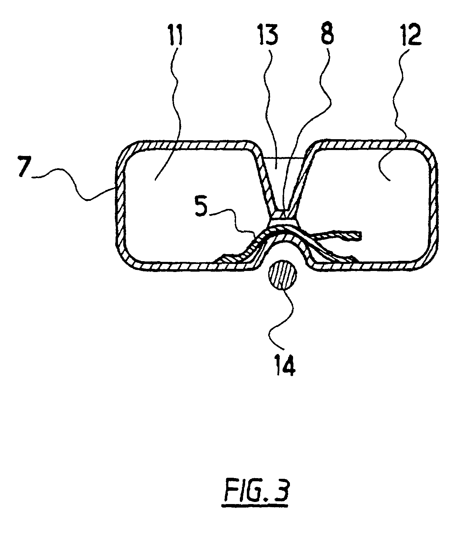

On connaît le document GB-A-2236288 qui divulgue la fixation d'un corps écarteur, porté par un support en forme de tige, par soudage entre les parois d'un réservoir, afin d'empêcher l'expansion du réservoir sous l'influence d'une pression interne élevée (résumé et figures 2 et 3).

On connaît aussi le brevet US-4,703,771 qui décrit un réservoir à carburant dont la forme de la paroi inférieure définit deux compartiments reliés librement entre eux et aussi par un tube posé sur la paroi inférieure, dont les extrémités s'ouvrent respectivement dans chaque compartiment et qui fait office de siphon (abstract et figure 3).

L'invention a dès lors pour objet d'offrir un procédé pour la fixation d'un siphon à l'intérieur d'un corps creux essentiellement constitué de matière thermoplastique qui soit simple, qui permette un positionnement précis et une fixation fiable et durable du siphon dans le corps creux.

L'invention concerne à cet effet un procédé pour la fixation du siphon à l'intérieur d'un corps creux essentiellement constitué de matière thermoplastique et essentiellement composé de deux parties communiquant entre elles par un passage supérieur de section réduite, selon lequel :
a) on positionne le siphon à fixer dans le corps creux, lors de la fabrication de ce corps creux, au moyen d'un support,
b) on fixe le siphon par plaquage à chaud entre deux faces opposées dudit corps creux, les faces opposées étant les faces supérieure et inférieure du passage de section réduite.

Le corps creux est essentiellement constitué de matière thermoplastique. Par matière thermoplastique, on entend désigner un ou plusieurs polymères thermoplastiques. Les polymères peuvent être des homopolymères, copolymères ou leurs mélanges. A titre de tels polymères, on peut retenir par exemple des polyoléfines ou des polymères du chlorure de vinyle. De bons résultats ont été obtenus à partir d'une polyoléfine, en particulier à partir d'un polyéthylène. D'excellents résultats ont été obtenus à partir d'un polyéthylène de haute densité (PEHD).

A la matière thermoplastique peuvent évidemment être ajoutés un ou plusieurs additifs usuels tels que antioxydants, stabilisants, pigments ou autres.

Le corps creux peut dans son ensemble être essentiellement constitué d'une seule matière thermoplastique. Il peut également comprendre en particulier plusieurs couches, essentiellement constituées de matières thermoplastiques différentes.

Par support, on entend ici désigner tout moyen de forme adaptée permettant de positionner et de maintenir le siphon à fixer dans le corps creux durant sa fabrication. En particulier, le support peut être une tige.

Par plaquage à chaud entre deux faces opposées du corps creux, on entend désigner toute technique d'assemblage à chaud par pression entre deux faces opposées dudit corps creux, tel que notamment par soudage.

Le corps creux peut être fabriqué par tout procédé. Il peut notamment être fabriqué par soudage d'au moins deux parties préalablement obtenues par injection. De préférence, il est fabriqué par extrusion-soufflage, en extrudant une paraison dans un moule ouvert.

Le corps creux peut être de tout type connu, notamment un flacon ou un réservoir. L'invention est intéressante dans le cas d'un réservoir, destiné en particulier à un véhicule automobile. Elle est spécialement intéressante dans le cas d'un réservoir à carburant.

Le siphon peut également être de tout type connu. En particulier, il est associé à la fonction de pompage du fluide contenu dans le corps creux.

Le siphon peut être constitué de toute matière usuellement connue à cet effet. De préférence, il est essentiellement constitué de matière thermoplastique, telle que définie ci-dessus.

D'excellents résultats ont été obtenus lorsque le siphon est réalisé préalablement par moulage par injection assistée de gaz. Ainsi, le ou les tuyaux composant le siphon sont préalablement moulés avec injection d'un gaz permettant l'expulsion de la veine centrale encore en fusion afin de réaliser la cavité du ou de chaque tuyau.

Selon l'invention, le siphon est fixé en un endroit du corps creux par plaquage à chaud dans un passage supérieur de section réduite par lequel communiquent deux parties du corps creux, entre les faces opposées supérieure et inférieure de ce passage. De préférence, on le fixe au travers d'un plot de recollement entre les faces opposées de ce passage de section réduite. Par plot de recollement entre les faces opposées du passage de section réduite, on entend ici désigner une soudure locale entre deux faces opposées de ce passage, obtenue lors de la fermeture du moule par une forme adaptée de ce dernier. Un tel plot de recollement peut être prévu lors de la conception du corps creux, notamment en vue d'améliorer sa rigidité. A défaut, il peut y être intégré essentiellement pour la fixation du siphon selon la présente invention. En toute hypothèse, sa forme et sa position précise peuvent être avantageusement adaptées en vue de la fixation du siphon selon la présente invention.

Grâce à leur commodité de fabrication, il est possible de donner aux corps creux des formes spécialement élaborées. Il est ainsi possible de réaliser un corps creux essentiellement composé de deux parties communiquant entre elles par un passage supérieur (en utilisation normale) de section réduite. Un tel corps creux peut être particulièrement intéressant dans le cas d'un réservoir à carburant pour véhicule automobile, chevauchant sous le passage de section réduite par exemple une ligne d'échappement ou un arbre de transmission. Une telle conformation peut néanmoins poser certaines difficultés spécifiques, par exemple dans le cas d'un réservoir la création de deux poches devenant indépendantes au fur et à mesure que le niveau de liquide contenu baisse et, lorsqu'il n'existe un dispositif de puisage (pompe) que dans l'une des parties, un désamorçage de ce dispositif. Dans le cas d'un réservoir à carburant pour véhicule automobile, ce phénomène peut en outre être suscité ou favorisé par certaines situations critiques (inclinaisons, virages,...) et avoir pour conséquence des désamorçages de l'aspiration de carburant et donc des pannes-moteur impromptues.

Afin de réduire un tel risque, on peut relier les deux parties d'un corps creux, en particulier d'un réservoir à carburant, par au moins un tuyau. Par l'effet dynamique du carburant, l'air contenu dans ce tuyau est chassé et un siphon met en communication les deux parties du réservoir afin d'en équilibrer les niveaux.

Le procédé selon la présente invention permet de positionner de manière particulièrement précise et de fixer de manière remarquablement fiable et durable un siphon à l'intérieur d'un corps creux.

La présente invention a dès lors également pour objet un réservoir à carburant essentiellement constitué de matière thermoplastique et composé de deux parties communiquant entre elles par un passage supérieur de section réduite, à l'intérieur duquel est fixé un siphon essentiellement constitué de matière thermoplastique, par plaquage à chaud entre la face supérieure et la face inférieure du passage de section réduite.

Pour les différentes définitions relatives à cet aspect de l'invention, on se référera aux définitions antérieurement données des notions concernées.

De préférence, le siphon est fixé au travers d'un plot de recollement entre deux faces opposées du passage de section réduite.

Les figures qui suivent illustrent l'invention de manière non limitative.

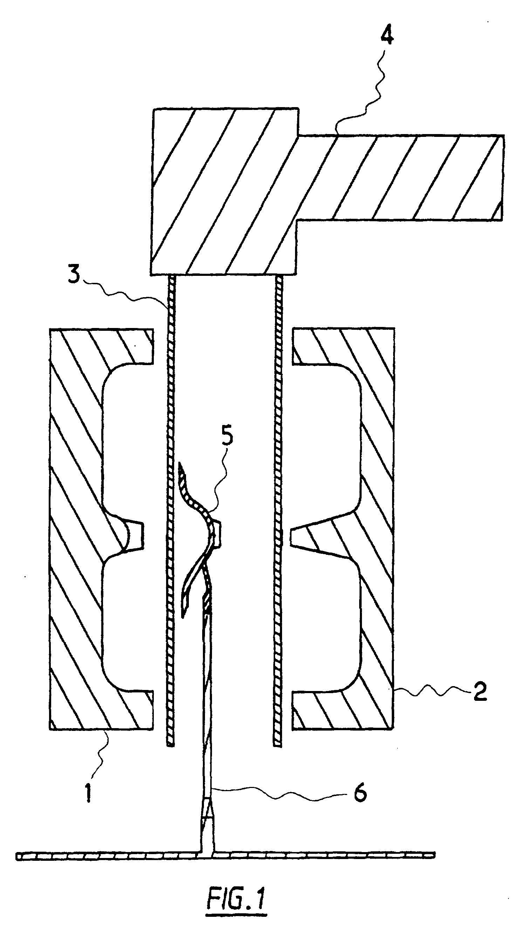

La figure 1 représente schématiquement en coupe un moule pour l'extrusion-soufflage d'un réservoir à carburant pour véhicule automobile. Sur cette figure, un moule constitué de deux parties (1) et (2) est ouvert et une paraison (3) y a été introduite par une extrudeuse (4). Un siphon (5) a été introduit dans la paraison et y est maintenu et positionné par une tige (6).

La figure 2 représente schématiquement le même moule en position fermée, dans laquelle un réservoir (7) est formé par soufflage. On peut y voir en outre un plot de recollement (8), soudure locale entre la face supérieure et la face inférieure du réservoir, obtenue lors de la fermeture du moule par une forme adaptée en cet endroit des deux parties du moule (9)(10). Au travers de ce plot de recollement (8), le siphon (5) est plaqué à chaud et fixé entre les faces supérieure et inférieure du réservoir (7).

La figure 3 représente schématiquement en coupe un réservoir (7) avec un plot de recollement (8). Le réservoir (7) est essentiellement composé de deux parties (11) et (12), communiquant entre elles, dans d'autres sections que celles selon le plot de recollement, par un passage supérieur (13) de section réduite. Sous ce passage de section réduite (14), le réservoir (7) peut, après son installation sur un véhicule automobile, chevaucher par exemple une ligne d'échappement ou un arbre de transmission (14). Le carburant peut être aspiré vers l'alimentation du moteur à partir du fond de la partie (11) du réservoir (7). Lorsque le niveau de carburant baisse en dessous du niveau du passage entre les deux parties du réservoir, la partie (12) du réservoir, non dotée d'un dispositif de puisage de carburant, devient une poche "morte". En outre, le niveau de carburant de cette partie (12) du réservoir peut être éventuellement augmenté, par rapport à celui de l'autre partie (11), dans certaines circonstances particulières (inclinaisons, virages, ...). Pour éviter dans ce cas toute interruption impromptue de l'alimentation en carburant du moteur, un siphon (5) est fixé dans le réservoir (7) au travers du plot de recollement (8) et met en communication le fond des deux parties (11) (12) du réservoir. Ainsi, dès qu'un effet de vague dû à un mouvement du carburant chasse tout l'air contenu dans le siphon (5), le siphon est amorcé et équilibre les niveaux entre les deux parties (11) (12) du réservoir.

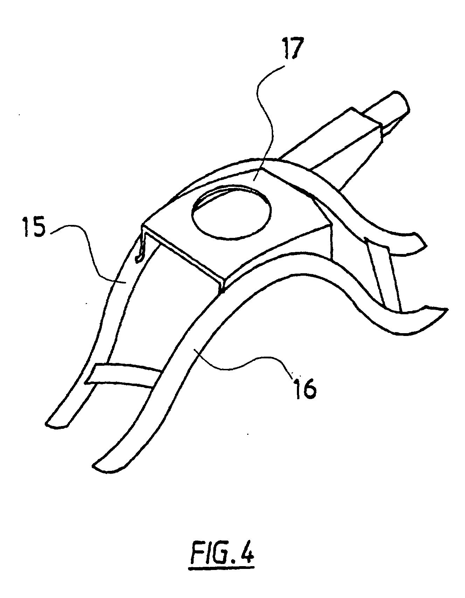

La figure 4 représente un siphon (5) composé de deux tuyaux (15)(16) et d'un élément central (17) permettant sa fixation dans un réservoir par plaquage à chaud au travers d'un plot de recollement.

## Revendications

1. Procédé pour la fixation d'un siphon (5) à l'intérieur d'un corps creux (7) essentiellement constitué de matière thermoplastique et essentiellement composé de deux parties (11, 12) communiquant entre elles par un passage supérieur de section réduite (13), selon lequel :
a) on positionne le siphon (5) à fixer dans le corps creux (7), lors de la fabrication de ce corps creux, au moyen d'un support (6);
b) on fixe le siphon (5) par plaquage à chaud entre deux faces opposées dudit corps creux, les faces opposées étant les faces supérieure et inférieure du passage de section réduite (13).

2. Procédé selon la revendication 1, dans lequel le corps creux (7) est fabriqué par extrusion-soufflage, en extrudant une paraison (3) dans un moule ouvert (1, 2), en positionnant le siphon (5) à fixer dans la paraison (3) au moyen du support (6), en fermant le moule (1, 2) et en soufflant le corps creux de telle manière que le siphon soit fixé par plaquage à chaud entre deux faces opposées du passage de section réduite (13).

3. Procédé selon l'une quelconque des revendications 1 ou 2, dans lequel le corps creux est un réservoir à carburant (7).

4. Procédé selon l'une quelconque des revendications 1 à 3, dans lequel le siphon (5) est essentiellement constitué de matière thermoplastique.

5. Procédé selon l'une quelconque des revendications 1 à 4, dans lequel on fixe le siphon (5) au travers d'un plot de recollement (8) entre deux faces opposées du passage de section réduite.

6. Procédé selon la revendication 5, dans lequel le siphon (5) est réalisé préalablement par moulage par injection assistée de gaz.

7. Réservoir à carburant (7) essentiellement constitué de matière thermoplastique et composé de deux parties (11, 12) communiquant entre elles par un passage supérieur de section réduite (13), a l'intérieur duquel est fixé un siphon (5) essentiellement constitué de matière thermoplastique, par plaquage à chaud entre la face supérieure et la face inférieure du passage de section réduite (13).

8. Réservoir à carburant selon la revendication 7, dans lequel le siphon (5) est fixé au travers d'un plot de recollement (8) entre la face supérieure et la face inférieure du passage de section réduite (13).

## Patentansprüche

1. Verfahren zur Befestigung eines Siphons (5) im Inneren eines Hohlkörpers (7), der im Wesentlichen aus thermoplastischem Material besteht und sich im Wesentlichen aus zwei Teilen (11, 12) zusammensetzt, die untereinander durch einen oberen Durchlass mit reduziertem Querschnitt (13) kommunizieren, nach dem:
a) man den zu befestigenden Siphon (5) mit Hilfe einer Halterung (6) im Hohlkörper (7) positioniert, und zwar bei der Fertigung dieses Hohlkörpers,
b) man den Siphon (5) durch Heißplattierung zwischen zwei gegenüberliegenden Seiten des besagten Hohlkörpers befestigt, wobei die gegenüberliegenden Seiten die Oberund die Unterseite des Durchlasses mit reduziertem Querschnitt (13) sind.

2. Verfahren nach Anspruch 1, bei dem der Hohlkörper (7) durch Extrusionsblasformen gefertigt wird, indem man einen Vorformling (3) in eine offene Form (1, 2) extrudiert, indem man den zu befestigenden Siphon (5) mit Hilfe der Halterung (6) im Vorformling (3) positioniert, indem man die Form (1, 2) schließt und indem man den Hohlkörper derart bläst, dass der Siphon (5) durch Heißplattierung zwischen zwei gegenüberliegenden Seiten des Durchlasses mit reduziertem Querschnitt (13) befestigt wird.

3. Verfahren nach einem der Ansprüche 1 oder 2, bei dem der Hohlkörper ein Kraftstoffbehälter (7) ist.

4. Verfahren nach einem der Ansprüche 1 bis 3, bei dem der Siphon (5) im Wesentlichen aus thermoplastischem Material besteht.

5. Verfahren nach einem der Ansprüche 1 bis 4, bei dem man den Siphon (5) mittels einer Verklebungsstelle (8) zwischen zwei gegenüberliegenden Seiten des Durchlasses mit reduziertem Querschnitt befestigt.

6. Verfahren nach Anspruch 5, bei dem der Siphon (5) zuvor durch gasunterstütztes Spritzen hergestellt worden ist.

7. Kraftstoffbehälter (7), der im Wesentlichen aus thermoplastischem Material besteht und sich im Wesentlichen aus zwei Teilen (11, 12) zusammensetzt, die untereinander durch einen oberen Durchlass mit reduziertem Querschnitt kommunizieren, in dessen Innerem ein im Wesentlichen aus thermoplastischem Material bestehender Siphon (5) durch Heißplattierung zwischen der Oberseite und der Unterseite des Durchlasses mit reduziertem Querschnitt (13) befestigt ist.

8. Kraftstoffbehälter nach Anspruch 7, bei dem der Siphon (5) mittels einer Verklebungsstelle (8) zwischen der Oberseite und der Unterseite des Durchlasses mit reduziertem Querschnitt (13) befestigt ist.

## Claims

1. Process for securing a siphon (5) inside a hollow body (7) essentially made of thermoplastic material and essentially made up of two parts (11, 12) communicating with each other via a narrow upper passage, according to which
a) the siphon (5) to be secured is positioned in the hollow body (7), during its manufacture, by means of a support (6),
b) the siphon (5) is secured by being hot-plated between two opposed faces of the said hollow body, said opposed faces being the upper and lower faces of the narrow passage.

2. Process according to Claim 1, in which the hollow body (7) is manufactured by extrusion blow moulding, by extruding a parison (3) into an open mould (1, 2), by positioning the siphon (5) to be secured in the parison (3) by means of the support (6), by closing the mould (1, 2) and by blow moulding the hollow body in such a way that the siphon is secured by being hot-plated between two opposed faces of the narrow passage (13).

3. Process according to either of Claims 1 and 2, in which the hollow body is a fuel tank (7).

4. Process according to any one of Claims 1 to 3, in which the siphon (5) is essentially made of thermoplastic material.

5. Process according to any one of Claims 1 to 4, in which the siphon (5) is secured by means of a bonding block (8) between two opposed faces of the narrow passage.

6. Process according to Claims 5, in which the siphon (5) is produced beforehand by gas-assisted injection moulding.

7. Fuel tank (7) essentially made of thermoplastic material and made up of two parts (11, 12) communicating with each other via a narrow upper passage (13), inside which a siphon (5) is secured essentially made of thermoplastic material, by being hot-plated between the upper face and the lower face of the said narrow passage (13).

8. Fuel tank according to Claim 7, in which the siphon (5) is secured by means of a bonding block (8) between the upper face and the lower face of the narrow passage (13).
